Europäisches Patentamt

European Patent Office

Office européen des brevets

(11)  **EP 2 690 487 B1**

(12)  **EUROPEAN PATENT SPECIFICATION**

(45) Date of publication and mention
of the grant of the patent:
**25.11.2015  Bulletin 2015/48**

(51) Int Cl.:
***G02C 7/04*** *(2006.01)*  ***G02C 7/02*** *(2006.01)*

(21) Application number: **12761218.2**

(22) Date of filing: **23.03.2012**

(86) International application number:
**PCT/JP2012/002055**

(87) International publication number:
**WO 2012/127882 (27.09.2012 Gazette 2012/39)**

(54) **CONTACT LENS MANUFACTURING METHOD**

HERSTELLUNGSVERFAHREN EINER KONTAKTLINSE

PROCÉDÉ DE FABRICATION D'UNE LENTILLE DE CONTACT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2011  PCT/JP2011/001747**

(43) Date of publication of application:
**29.01.2014  Bulletin 2014/05**

(73) Proprietor: **Menicon Co., Ltd.
Nagoya-shi, Aichi 460-0006 (JP)**

(72) Inventor: **SUZAKI, Asaki
Nagoya-shi
Aichi 460-0006 (JP)**

(74) Representative: **Jackson, Martin Peter
J A Kemp
14 South Square
Gray's Inn
London WC1R 5JJ (GB)**

(56) References cited:
**WO-A1-00/75716          WO-A1-2004/072709
WO-A1-2011/025846     CA-A1- 2 568 061
JP-A- 2001 505 672     JP-A- 2006 517 676**

**Description**

TECHNICAL FIELD

The present invention relates to a manufacturing method of a contact lens for wearing on the human eye, particularly a manufacturing method of a contact lens of a novel structure which can improve QOV (quality of vision).

BACKGROUND ART

As is well known, the human eye may have troubles in optical characteristics such as modulation ability and the like due to inheritance, environment, aging, disease or the like. In these cases, problems such as refractive error or the like occur, which makes it hard to obtain good vision. One of the conventional measures for these problems is using corrective lenses such as contact lenses, glasses, or the like.

However, with the conventional corrective lenses such as contact lenses or glasses, even when a corrective lens is prescribed according to the optical characteristics of the user, still there were evaluations such as, "It's hard to see," "I can't see objects well," and the like. This kind of vision problem refers to quality of vision (QOV), and in recent years, has been found to be due to residual irregular astigmatism caused by high-order aberration of the human eye. Specifically, the optical characteristics of the conventional corrective lenses are specified by the spherical lens power, the cylindrical lens power, and the cylindrical lens axial direction. As can be understood from this fact, while exhibiting an effective correction on myopia, hyperopia, presbyopia, and astigmatism, the conventional corrective lenses were not measures against residual irregular astigmatism.

In order to treat such residual irregular astigmatism, in Japanese Domestic Publication of International Patent Application No. JP-A-2004-526985 (Patent Document 1), proposed is prescription of a corrective lens for which high-order aberration existing in the eye of the user is measured and reverse code value high-order aberration is set so as to offset the high-order aberration to become zero. However, with this Patent Document 1, as noted in paragraph [0016] or the like, this is nothing more than giving optical characteristics that offset high-order aberration (to become zero) to the lens, which may be ideal but is extremely difficult to put into practical use. Specifically, in addition to the fact that there are diverse high-order aberrations with the human eye, coma aberration and the like which has a particularly big adverse effect on quality of vision (QOV) has different optical characteristics around the optical axis, so the corrective lens set with a high-order aberration for correction must be a custom made product, and not only the design but also the manufacturing of these is extremely difficult and impractical.

Also, noted in Japanese Domestic Publication of International Patent Application No. 2006-517676 (Patent Document 2) as a method of improving the QOV in relation to residual irregular astigmatism is the provision of a corrective lens that uses a chart for which the level of effect on the QOV is actually measured for each order of the high-order aberration expressed by Zernike polynomials, the orders of high-order aberration important for improvement of QOV is specified, and the specified high-order aberrations are offset to achieve zero. However, with this Patent Document 2, as noted in paragraphs [0097] to [0099], this is nothing more than the goal of selecting only the specified high-order aberrations that adversely affect vision, and giving a corrective lens that offsets the selected specified high-order aberrations to achieve zero. Based on examination by the inventor of the present invention, with a corrective lens power that makes only the specified high-order aberrations zero in this way, the adverse effect on vision due to other residual high-order aberration is large, and it was difficult to obtain sufficient QOV improvement effect.

In particular, with this method noted in Patent Document 2, when a corrective lens is provided with a plurality of orders of high-order aberrations as the subject, and all of those high-order aberrations are offset to reach zero, the corrective lens design and manufacturing are extremely complex and they have to be made to order, so they are not very practical, and the same kinds of problems as those of Patent Document 1 are unavoidable. Meanwhile, when providing a corrective lens that has only one high-order aberration (e.g. spherical aberration) as the subject and offsetting that to reach zero, the adverse effect due to other remaining high-order aberrations (e.g. coma aberration) is large, and it was difficult to realize good vision.

In order to address such problems, in Japanese Patent Application No. 2010-093192 (Patent Document 3), the Applicant previously proposed a contact lens of a novel structure which is able to cope with residual irregular astigmatism by means of simple optical characteristics. Meanwhile, the present invention, with a technical concept which is further different from the contact lens described in this earlier application (Patent Document 3), provides a contact lens of novel and useful structure capable of achieving improved quality of vision (QOV) by realizing measures against residual irregular astigmatism at a practical level, and a method for manufacturing such a contact lens.

WO 00/75716 discloses use of a centering corneal contact lens which non-refractively corrects for natural spherical aberrations of the eye.

BACKGROUND ART DOCUMENTS

[Patent Documents]

Patent Document 1: JP-A-2004-526985
Patent Document 2: JP-A-2006-517676
Patent Document 3: Japanese Patent Application No. 2010-093192

SUMMARY OF THE INVENTION

PROBLEM THE INVENTION ATTEMPTS TO SOLVE

The present invention was created with the circumstances noted above as the background, and its object is to provide a contact lens of a novel structure and the manufacturing method thereof that is able to effectively improve quality of vision (QOV), as well as being easy to apply to users and having a high level of practicality.

MEANS FOR SOLVING THE PROBLEM

The present invention provides a contact lens manufacturing method including (a) an optical characteristics setting step of setting in an optical part a spherical aberration of a size corresponding to a coma aberration of a naked eye of a user, and of a size for which the spherical aberration of the naked eye of the user will not be offset and will be made to remain; (b) a lens shape setting step of determining a lens shape of the optical part wherein the spherical aberration set at the optical characteristics setting step is provided as a corrective optical characteristic for a residual irregular astigmatism caused by high-order aberration in the naked eye of the user; and (c) a lens forming step of forming a contact lens having optical characteristics in which a high-order aberration of that optical part is rotationally symmetrical around an optical axis, by means of forming the optical part to have the lens shape determined by the lens shape setting step; wherein at the optical characteristics setting step, the spherical aberration of the optical part is set with an RMS value that satisfies both of the following formulas: contact lens spherical aberration $\geq$ coma aberration of the naked eye of the user - spherical aberration of the naked eye of the user -0.10$\mu$m; and contact lens spherical aberration $\leq$ coma aberration of the naked eye of the user - spherical aberration of the naked eye of the user +0.10$\mu$m.

From the start, the present invention has a prerequisite of allowing coma aberration to remain in the eye of the contact lens user (referred to as the user hereinafter), and in regards to this point, is completely different from the concept of setting reverse code value coma aberration so as to offset the coma aberration existing in the human eye to become zero. Then, on top of that, as measures against coma aberration having an adverse effect on the quality of vision, by actively giving spherical aberration of a size corresponding to the coma aberration existing in the human eye to the human eye utilizing a contact lens, the decrease in QOV due to coma aberration is reduced.

Specifically, the present invention is focused on coma aberration among the high-order aberrations when improving vision, and in fact does not give corrective optical characteristics that offset the coma aberration, but rather is based on new knowledge of improving vision by giving spherical aberration of a size corresponding to the coma aberration as the corrective optical characteristic. In other words, it is not possible to avoid design and manufacturing being extremely difficult for improving vision as long as it is based on the prior art concept of simply achieving zero by offsetting all or specific high-order aberrations in order to suppress a decrease in vision due to high-order aberration as noted in Patent Documents 1 and 2 described previously. In contrast to this, focusing on the coma aberration which has a big adverse effect on vision, the present invention is established on a novel technical concept that is completely different from the past, which is to reduce the adverse effect due to coma aberration which is not rotationally symmetrical in relation to the optical center axis, by using spherical aberration which is rotationally symmetrical in relation to the optical center axis. In particular, with this kind of present invention, the spherical aberration given to the lens used as the corrective optical characteristic is nothing more than an optical characteristic corresponding to the coma aberration, and therefore it goes without saying that it does not achieve zero by offsetting the coma aberration, and it does not achieve zero by offsetting spherical aberration, either. It should be understood that this is technology of a completely different perspective from that of the past, which makes having coma aberration and spherical aberration remain be something affirmative.

In fact, by setting spherical aberration in the contact lens, being able to effectively deal with coma aberration which has a large adverse effect on QOV has a large significance when manufacturing, handling or wearing contact lenses or the like, which are implementations of the present invention. Specifically, with a focus only on coma aberration in the naked eye of the user, to give wave aberration of the reverse code to the coma aberration, complex optical characteristics and lens surface shape that are rotationally asymmetrical must be given to the contact lens, and not only is the design and manufacturing thereof extremely difficult, but when wearing it as well, it is necessary to have precise alignment in the circumference direction, so this is not practical. In contrast to this, the contact lens according to the present invention is formed having spherical aberration, namely, among the high-order aberrations, optical characteristics that are rotationally symmetrical around the optical axis. Therefore, positioning of high accuracy in the circumference direction is not necessary during the manufacturing process or when wearing, so manufacturing and handling are easy, which makes it easy to put this to practical use as well.

In other words, in addition to finding that it is possible to reduce insufficient QOV due to coma aberration in the human eye by using spherical aberration, focus was placed on being able to perform setting of spherical aberration in the contact lens with the contact lens high-order aberration characteristics being rotationally symmetrical, and the present invention was completed by combining these with each other. Then, if the present invention which was completed based on this kind of novel basic concept is followed, it became possible to provide a novel contact lens which can reduce the decrease in QOV due to coma aberration which is one type of high-order aberration for which a practical countermeasure was extremely difficult in the past, and to give good QOV, while being sufficiently practical in terms of manufacturing and wearing.

With the present invention, to deal with the decrease in QOV due to coma aberration existing in the human eye, the fact that it is effective to actively give spherical aberration to the eye optical system using the contact lens has been objectively confirmed by comparison between examples and comparative examples in the embodiment described later. When examined by the inventor of the present invention, at least the subjective focal depth is made deeper by giving spherical aberration, and it is thought that this is an item for which one technical basis is acknowledged. In particular, the QOV improvement effect exhibited by the contact lens according to the present invention is also clear from the example data described later.

However, the spherical aberration with the contact lens of the present invention is set at a size corresponding to the coma aberration in the user's naked eye (the eye on which no contact lens is worn), and if the coma aberration is large, then large spherical aberration is set, and if the coma aberration is small, then small spherical aberration is set. Here, the spherical aberration corresponding to the coma aberration of the user is assessed by the eye optical system of the user during wearing the contact lens. Therefore, in consideration of the spherical aberration existing in the user's naked eye, the spherical aberration of the contact lens is set so that the sum of the spherical aberration of the naked eye and the spherical aberration given by the contact lens roughly corresponds to the coma aberration in the user's naked eye. Besides, with regard to the specific correlation between the coma aberration and the spherical aberration in the eye optical system during wearing the contact lens, matching the two items is not necessarily judged to be optimal. It can be determined considering not only objective optical characteristics of the user's eye, but also subjective vision preferences of the user or the like.

For this kind of determination method, a device that can easily measure the spherical aberration for not only the lens optical system but also the naked eye optical system is disclosed in Japanese Patent No. 4652558, the specification of U.S.

Patent No. 7,078,665 and the like, and for example since the OPAL 300 (product name) made by Spot Optics Corp. is available on the market as a wave aberration measurement device using the Shack-Hartmann Method, a person skilled in the art could implement this easily. In particular, when determining the value of the spherical aberration corresponding to the coma aberration with the eye optical system, it is not necessary to match both items, as described above. For example, even when dealing with contact lenses or glasses, prescription is ultimately left to the subjective vision sense of the user, or is selected based on consideration of the application. From this point of view, determination of the value of the spherical aberration can be handled by the person skilled in the art by referencing the user's opinion, the objective measurement information or the like. Thus, compared to the prior art structure contact lenses as noted in Patent Documents 1 and 2, for example, implementing the present invention does not involve an impractical level of difficulty. Of course, with the present invention, to make it possible to more easily and quickly determine the spherical aberration, it is effective to further narrow the selection range of the spherical aberration, and from that objective, it is preferable to use the optical characteristics selection technology given by the formulas and the like noted hereafter.

The RMS value is the value (unit: $\mu$m) for which the wave aberration in the pupil area of the human eye optical system is put into numerical form (displayed as root mean square) using a wave aberration analysis device (wave sensor). According to the formula noted above, by realizing spherical aberration corresponding to the coma aberration in the user's eye optical system by means of the contact lens, it is easy to obtain good QOV that also considers the spherical aberration existing in the naked eye.

As a specific example, assuming that the spherical aberration of the naked eye is 0.23, the spherical aberration of the contact lens is preferably set as shown in the following formula:

4

$$(\text{coma aberration of the naked eye of the user} - 0.33\,\mu\text{m}) \le \text{spherical aberration}$$

$$\text{of the contact lens} \le (\text{coma aberration of the naked eye of the user} - 0.13\,\mu\text{m}).$$

Also, the optical characteristics of the human eye tend to change as age increases. In light of that, using the optical characteristics of ocular tissues such as cornea, human lens or the like, for example, it is possible to estimate the coma aberration existing in the user's naked eye according to the age of the user. From this perspective, as a result of additional examination by the inventor of the present invention, setting the spherical aberration set for the contact lens according to the present invention (RMS value) using the patient age corresponding to the coma aberration as an index based on the following formulas is also effective for obtaining good QOV:

$$\text{contact lens spherical aberration} = A + B \times \text{user age};$$

$$-0.33 \le A\,(\mu\text{m}) \le -0.03;$$

and

$$0.003 \le B\,(\mu\text{m}) \le 0.004.$$

Meanwhile, if the user's eye is not a natural eye, in specific terms, in the case where an artificial intraocular lens is implanted into the eye or the like, the change in optical characteristics of the naked eye with aging is different. Thus, setting of the spherical aberration to the contact lens based on the above formulas may not be suitable.

In light of that, in the case where the user has an intraocular lens implanted and the intraocular lens is a spherical intraocular lens that has no corrective optical characteristics for spherical aberration in the human eye, which has been commonly used from the past, it is effective to employ the following formulas instead of the above formulas:

$$\text{contact lens spherical aberration} = A + B \times \text{user age};$$

$$-0.25 \le A\,(\mu\text{m}) \le 0.05;$$

and

$$0.003 \le B\,(\mu\text{m}) \le 0.004.$$

Alternatively, in the case where the user has an intraocular lens implanted and the intraocular lens is a special aspheric intraocular lens that has corrective optical characteristics for which spherical aberration of the naked eye becomes zero, it is effective to employ the following formulas instead of the above formulas:

$$\text{contact lens spherical aberration} = A + B \times \text{user age};$$

$$-0.10 \le A\,(\mu\text{m}) \le 0.20;$$

and

$$0.003 \le B\,(\mu\text{m}) \le 0.004.$$

Furthermore, considering the fact that coma aberration and spherical aberration, which are each one optical characteristic of the human natural eye, change according to age, additional examination was made by the inventor of the present invention. As a result, it was found that from human eye optical characteristics measurement data for the population of the same age bracket as the contact lens user, it is possible to find a contact lens spherical aberration that will give good QOV to that user or to judge suitability of the determined spherical aberration. Specifically, using a contact lens for which the spherical aberration of a size such that the spherical aberration in the human eye (the naked eye) of the user is removed from the average value of the measurement data of the human eye spherical aberration for the same age bracket population as the user is set as the spherical aberration of a size corresponding to the coma aberration existing in the user's eye is effective for obtaining good QOV.

In addition, it is not essential to set low-order aberration to the contact lens according to the present invention. The contact lens for which only the spherical aberration that is high-order aberration is set in this way is able to achieve improvement of QOV by applying to a person whose naked eye does not have low-order aberration but has QOV problems due to high-order aberration alone caused by implant of an intraocular lens or the like, for example.

On the other hand, for the contact lens according to the present invention, it would also be acceptable to set low-order aberration such as spherical lens power or cylindrical lens power to the optical part, in addition to the spherical aberration which is one of high-order aberrations. The contact lens for which low-order aberration is concomitantly set in this way can effectively attain further improvement of QOV in conjunction with correction of refractive errors such as myopia, hyperopia, presbyopia, or astigmatism with a single contact lens by applying to a person who has QOV problems due to high-order aberration as well as refractive errors such as myopia or the like.

In another preferred mode of the contact lens according to the present invention, the optical characteristics of the optical part are rotationally symmetrical around the optical axis. For example, by making the optical characteristics concomitantly including the low-order aberration in addition to the high-order aberration rotationally symmetrical around the optical axis, the operations during manufacturing or wearing of the contact lens will be still easier, thereby further improving practicality. Besides, in the case where the optical characteristics are made rotationally symmetrical around the optical axis, it is desirable to make the lens shape rotationally symmetrical as well around the geometric center axis set on the optical axis. Note that for the mode in which optical characteristics are rotationally asymmetrical around the optical axis, namely, in the cases where the cylindrical lens power is set or the lens is a bifocal lens or a multifocal lens for which each focus is set at different positions on the circumference, known circumferential rest positioning means such as a prism ballast, a slab-off, or the like will be employed. Moreover, even in the case where the low-order aberration is set by the rotationally asymmetrical optical characteristics in that way, the spherical aberration itself can be set by the rotationally symmetrical optical characteristics around the optical axis.

Also, a contact lens is described for which the spherical aberration of a size corresponding to the coma aberration in the user's naked eye, and of a size for which the spherical aberration will not be offset and will be made to remain in the user's naked eye is set for the optical part as the corrective optical characteristic for residual irregular astigmatism in the user's naked eye, and for which the high-order aberration for the optical part is rotationally symmetrical around the optical axis.

As is clear from the description above, the contact lens with this kind of structure can give good QOV to patients, and in fact the design and manufacturing can be realized easily, so it is easy to provide on the market and put to practical use. The contact lens of this kind of structure according to the present invention is preferably manufactured using the method of the present invention described above. Also, each preferred mode noted in the description of the manufacturing method above can be applied to the contact lens described as long as it is structurally feasible.

Also, with the contact lens described, it is preferable that at least one of the spherical aberration value set according to the method of the present invention as described above or the RMS value is displayed on at least one of the lens main unit, its individual package, the housing package or the housing box.

EFFECT OF THE INVENTION

If the present invention is followed, the QOV is improved by applying spherical aberration, which is an optical characteristic that is rotationally symmetrical around the optical axis, in relation to coma aberration having a big adverse effect on QOV while being difficult to offset. Accordingly, it is possible to realize a contact lens of a novel structure for which design, manufacturing, and handling are easy, and practical usability is excellent.

BRIEF DESCRIPTION OF THE DRAWINGS

FIG. 1 is a front view showing a contact lens.
FIG. 2 is a vertical cross section explanatory view of a human eye on which the contact lens shown in FIG. 1 is worn.
FIG. 3 is a graph for explaining the change with aging of the coma aberration and the spherical aberration of the eye (the naked eye) in the human eye.

FIG. 4 is a graph for explaining the change with aging of the coma aberration of the cornea in the human eye, shown together with the coma aberration of the eye (naked eye).

FIG. 5 is a graph for explaining the change with aging of the spherical aberration of the cornea and the spherical aberration of the human lens in the human eye.

FIG. 6 is a simulation optical image showing the vision during application to the human eye of the same user for the contact lens as the first through fifth examples of the present invention as well as for a comparative example 1 for which spherical aberration was set to zero.

FIG. 7 is a simulation optical image showing the vision during application to the human eye of the same user for the contact lens as the sixth through eighth examples of the present invention as well as for a comparative example 2 for which spherical aberration was set to zero.

EMBODIMENTS FOR CARRYING OUT THE INVENTION

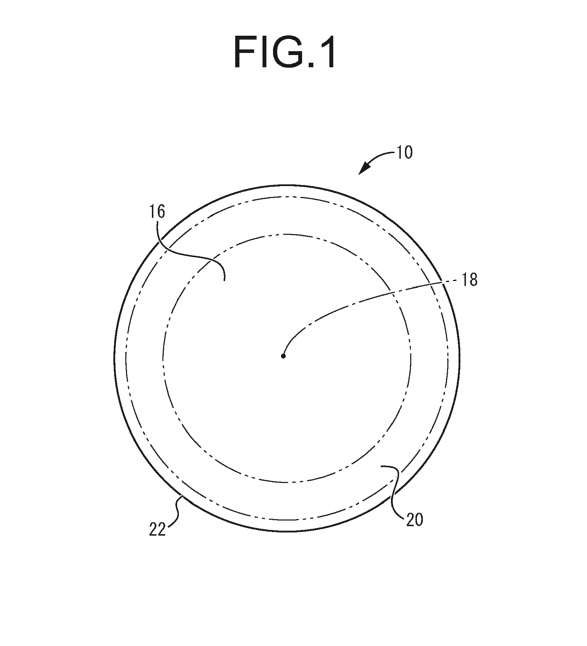

Following, we will describe an embodiment of the present invention while referring to the drawings. First, in FIG. 1, a contact lens 10 is shown. While the present invention can be applied to both soft and hard contact lenses, the embodiment hereinbelow is described as a soft contact lens.

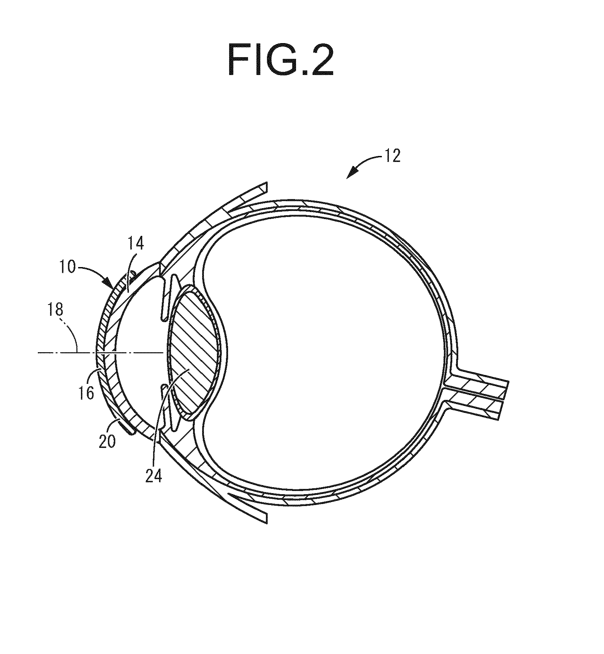

The contact lens 10 has a basic shape which is known in the art as a soft contact lens. Specifically, the contact lens 10 is in an approximate shape of a spherical shell overall, and as depicted in FIG. 2, includes an optical part 16 which gives optical characteristics to the eye optical system of a user by being worn over a cornea 14 of a human eye 12. The optical part 16 is a round shape area in front view, formed around the geometric center axis and the optical axis (the optical center axis) of the contact lens 10 as a lens center axis 18. To the outer periphery of the optical part 16, provided is a peripheral part 20 that surrounds the optical part 16 and extends in an annular shape. The outer peripheral edge of the peripheral part 20 is made to be an edge part 22 that connects the front and back faces of the contact lens 10.

Then, in consideration of curvature radius of the cornea, pupil diameter etc. of the user, the base curve (BC), the lens diameter (DIA) or the like of the contact lens 10 are appropriately set. In addition, like conventionally known contact lenses for vision correction, it would be possible to set a spherical lens power or a cylindrical lens power of suitable size for correcting myopia, hyperopia, astigmatism or the like of the user, according to the level thereof, with a suitable mode depending on the user. However, in the present invention, setting the low-order aberration optical characteristics such as spherical lens power is optional and not essential.

Besides, material of the contact lens 10 is not restricted in the present invention, and the contact lens 10 can be formed using a conventionally known soft contact lens material such as PHEMA, PVP, silicone hydrogel or the like.

Moreover, with the contact lens 10 presently described, spherical aberration which is one of high-order aberrations is actively given to the optical part 16. The spherical aberration is set at a size corresponding to the value of the coma aberration existing in the naked eye of the contact lens user, and at a size such that the spherical aberration will not be offset and will be made to remain in the naked eye of the user. In specific terms, with the eye optical system for which the contact lens 10 is worn (namely, the optical system including the human eye and the contact lens), the spherical aberration is set for the contact lens 10 so that the size of the coma aberration is roughly the same level as that of the spherical aberration. In this way, the manufacturing method of the contact lens 10 with this embodiment is constituted including the optical characteristics setting step. Of course, since no coma aberration is set to the contact lens 10, the coma aberration in the eye optical system of the user who wears the contact lens 10 is equal to the coma aberration in the eye optical system of the naked eye of the user who does not wear the contact lens 10.

The coma aberration and the spherical aberration values can both be represented by RMS values ($\mu$m). In other words, the volume of skew in the light ray direction by the actual wave surface in relation to the virtual wave surface orthogonal to the light rays expresses each aberration as a value expressed in root mean square on that virtual wave surface.

Also, the coma aberration existing in the user's naked eye is almost all according to each optical characteristic of the cornea 14 and a human lens 24. However, because the size of the spherical aberration of the contact lens 10 can be set so as to correspond to the size of the coma aberration existing in the user's naked eye, it is not necessary to individually specify the coma aberrations in the cornea 14 and the human lens 24. Incidentally, the size of the coma aberration existing in the naked eye is obtained by using known wave sensors such as those of Shack-Hartmann type, for example. Namely, the size of such coma aberration is expressed as a synthetic vector volume of the $C_3^1$ term (horizontal coma aberration) and $C_3^{-1}$ term (vertical coma aberration) with Zernike polynomials obtained by performing wave aberration analysis. Of course, the coma aberration of the cornea 14 can be obtained from the shape or thickness of the cornea 14 found based on cornea topography or the like measured by, for example, a reflex keratometer, and the coma aberration of the human lens 24 can also be obtained by using the coma aberration value of the entire naked eye and the coma aberration value of the cornea 14.

Meanwhile, like the coma aberration, the spherical aberration existing in the user's naked eye is also almost all according to each optical characteristic of the cornea 14 and a human lens 24, and can be measured by known wave sensors or the like. As a specific example, the $C_4^0$ term with a Zernike polynomial obtained by performing wave aberration analysis of the overall wave aberration measured by the wave sensor is used as the spherical aberration.

Therefore, the spherical aberration value to be set for the contact lens 10 can be found based on the formula below.

$$\text{Contact lens spherical aberration} \approx \text{Coma aberration of the user's naked}$$
$$\text{eye} - \text{Spherical aberration of the user's naked eye}$$

Considering this fact, it is possible to use the following formulas to express the preferable setting range of the spherical aberration (RMS value) for the optical part 16 of the contact lens 10 set with the optical characteristics setting step described previously.

$$\text{Contact lens spherical aberration} \geq \text{Coma aberration of the user's naked}$$
$$\text{eye} - \text{Spherical aberration of the user's naked eye} - 0.10\mu m$$

$$\text{Contact lens spherical aberration} \leq \text{Coma aberration of the user's naked}$$
$$\text{eye} - \text{Spherical aberration of the user's naked eye} + 0.10\mu m$$

However, with the formula above, "contact lens spherical aberration" is not necessarily optimally perfectly matched to the right side of the equation ("coma aberration - spherical aberration" of the user's naked eye). Perhaps this is because the vision (QOV) is a subjective item and there is a big individual difference, and for example the spherical aberration of the contact lens 10 judged to be optimal may be different between a user who senses that having a big difference in sharpness due to a difference in the distance from the subject item is not desirable, and a user who thinks he'd like to observe only objects of a specified distance at the highest level of sharpness.

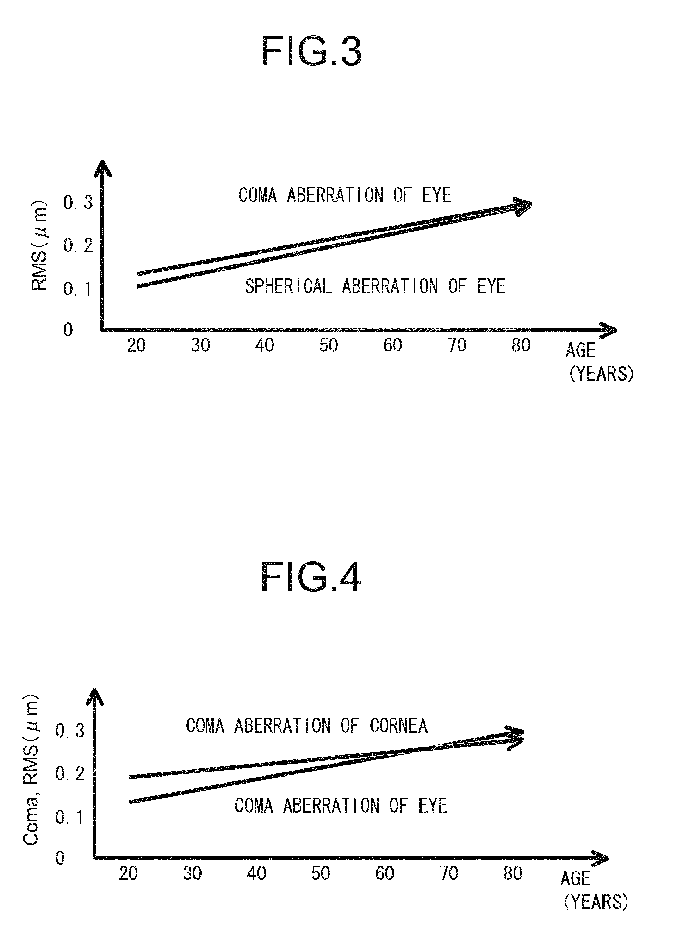

Furthermore, both the coma aberration and the spherical aberration in the human eye (naked eye), as respectively shown in FIG. 3, increase as a generally linear function according to aging. As will be understood from FIG. 3, the sizes of the coma aberration and the spherical aberration in the human eye are close to each other but are not matched. Considering this fact, the preferable setting range of the spherical aberration (RMS value) with the optical part 16 of the contact lens 10 set during the optical characteristics setting step described previously can be expressed using the following formulas for which A and B are each constants.

$$\text{Contact lens spherical aberration} = A + B \times \text{user age}$$

$$-0.33 \leq A\ (\mu m) \leq -0.03$$

$$0.003 \leq B\ (\mu m) \leq 0.004$$

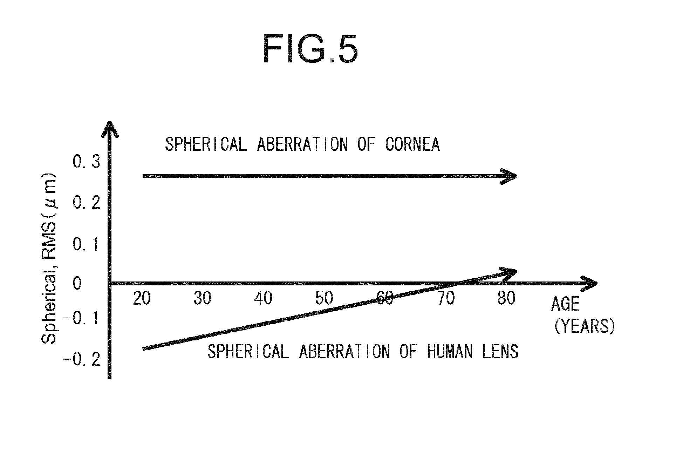

Meanwhile, for another case where the user's eye is not a natural eye but an aphakic intraocular lens is implanted therein, the change in spherical aberration of the human lens with aging should not be considered but only the change in spherical aberration of the cornea with aging should be considered. With respect to the coma aberration, as shown in FIG. 4, for the senior age bracket which is a general age bracket for implant of an intraocular lens, the coma aberration of the entire eye (naked eye) is approximately equal to the coma aberration of the cornea. Thus, it is conceivable that the coma aberration of the eye almost doesn't change at all even after the human lens was extracted. On the other hand, the spherical aberrations of the cornea 14 and the human lens 24 change with aging in the mode as shown in FIG. 5. Considering this fact, in the case of the contact lens user who has a spherical intraocular lens implanted that has no corrective optical characteristics for spherical aberration, the preferable setting range of the spherical aberration (RMS value) with the optical part 16 of the contact lens 10 set during the optical characteristics setting step described previously can be expressed using the following formulas, instead of the above formulas, for which A and B are each constants.

$$\text{Contact lens spherical aberration} = A + B \times \text{user age}$$

$$-0.25 \leq A\,(\mu m) \leq 0.05$$

$$0.003 \leq B\,(\mu m) \leq 0.004$$

Furthermore, for yet another case where the intraocular lens implanted in the user has spherical aberration, it is necessary to consider the spherical aberration. Specifically, in the case where the intraocular lens is an aspheric intraocular lens that has corrective optical characteristics for which, for example, spherical aberration of the cornea is offset and spherical aberration of the human eye (naked eye) becomes zero, the preferable setting range of the spherical aberration (RMS value) with the optical part 16 of the contact lens 10 set during the optical characteristics setting step described previously can be expressed using the following formulas, instead of the above formulas, for which A and B are each constants.

$$\text{Contact lens spherical aberration} = A + B \times \text{user age}$$

$$-0.10 \leq A\,(\mu m) \leq 0.20$$

$$0.003 \leq B\,(\mu m) \leq 0.004$$

Also, with a different approach considering that the optical characteristics of the human eye 12 change with aging, it is also preferable to set the spherical aberration value for the optical part 16 of the contact lens 10 set during the optical characteristics setting process described previously within a specific range determined based on the human eye optical characteristics of the population when a plurality of healthy persons in the same age level as the user is set as the population.

In specific terms, the difference between the average value of the spherical aberration measurement data of the human eye (eye optical system of the naked eye including the cornea and the human lens) with the population noted above and the spherical aberration of the human eye (naked eye) of the user is set to the contact lens 10 as the spherical aberration of a size that corresponds to the coma aberration of the user's naked eye. The fact that the spherical aberration of the contact lens 10 set in this way is roughly equal to the spherical aberration of the human eye of a healthy person which is the population noted above was discovered by the inventor of the present invention.

In the preferred setting range as described above, the spherical aberration determined considering the coma aberration and the spherical aberration existing in the naked eye of the contact lens user, namely, the spherical aberration set with the optical characteristics setting step described previously, is set as the corrective optical characteristics for residual irregular astigmatism in the user's naked eye. By so doing, the lens shape setting step that determines the target optical characteristics (lens shape) of the optical part 16 of the contact lens 10 is performed. As is well known by a person skilled in the art involved in the design of optical lenses, if the setting values of the optical characteristics are determined in this way, the specific shape of the contact lens (shape of the lens front and back faces which is the refractive surface) can be set using various types of well known lens design software using a ray tracing algorithm based on Snell's Law, for example. Besides, as described previously, low-order aberration such as spherical lens power, cylindrical lens power or the like is concomitantly considered and set in order to correct myopia, astigmatism or the like if they exist in the eye optical system of the contact lens user.

After that, the optical part 16 of the lens shape based on the design information determined with the lens shape setting step described previously is formed by a lens forming step using the aforementioned lens material and using a well known molding method, spin-casting method, lathe-cutting method or the like, and the contact lens 10 having the target optical characteristics is manufactured.

Then, for the contact lens 10 manufactured in this way, in the optical characteristics setting step described previously, rotationally symmetrical optical characteristics with the lens center axis 18 as the rotational center axis are set to the optical part 16 with respect to at least the high-order aberration and preferably over the entirety including the low-order aberration and the high-order aberration. Meanwhile, for the contact lens 10, optical characteristics such as coma aberration or the like which are asymmetrical in the circumference direction around the lens center axis 18 are not set. Thus, in typical cases when a prerequisite is using a uniform lens material, with respect to at least the high-order aberration, each of the lens front shape and back shape is also a rotating body shape with the lens center axis 18 as the rotation center axis. Note that in the optical characteristics setting step described previously, if low-order aberration that offsets the low-order aberration vision of the user's naked eye is set concomitantly with the spherical aberration, it is preferable to set at least one of the spherical lens power and the cylindrical lens power. Although the optical characteristics or the lens surface shape will not be rotationally symmetrical around the lens center axis 18 due to the cylindrical lens power for example, since the design or manufacturing of the low-order aberration is an established art and is easy, manufacturing or handling will not be remarkably difficult due to setting of the cylindrical lens power or the like.

Therefore, with the contact lens 10, at any stage, including manufacturing, handling, wearing or the like, it is possible to easily perform design and manufacturing as well as wearing without specially considering alignment in the circumference direction.

Incidentally, as described above, a number of the simulation results performed to confirm that good QOV was given by the contact lens 10 with this embodiment are shown hereafter as examples of the present invention.

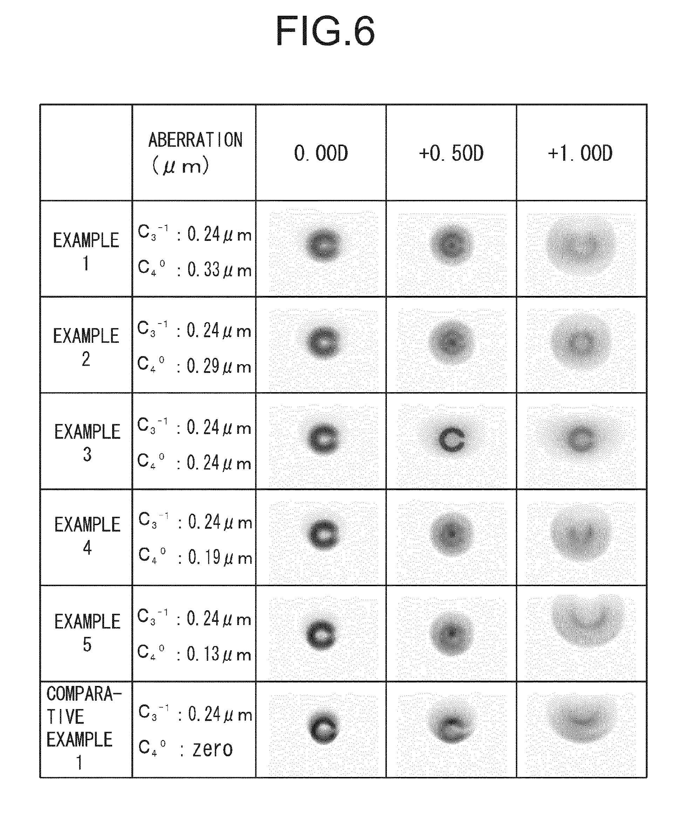

First, FIG. 6 shows the simulation results when the contact lens manufactured according to the present invention was used for a 60 year old user. With this simulation, using optical design software ZEMAX (product name, made by Zemax Development Corp. of the U.S.), as an eyeball model of a 60 year old typical person (who has statistically average optical characteristics), an item with coma aberration in the naked eye (vertical coma aberration volume of the $C_3^{-1}$ term with a Zernike polynomial) of 0.24 $\mu$m was constructed. Then, with the contact lens worn on that eyeball model, optical characteristics of the eye optical system correlating to the optical area applicable to a pupil of 6 mm were evaluated with a Landolt ring simulation optical image. Note that no low-order aberration such as myopia, astigmatism or the like existed in this eyeball model.

Then, for each model of these examples 1 through 5 and comparative example 1, with the point for which the focal point position by spherical lens power is optimal (0.00 D) as a reference, a simulation optical image of each position when the focal point position is skewed in the near direction by a distance correlating to 0.50 D and 1.00 D from there was obtained, and the vision (QOV) was assessed using those.

Comparative example 1 is an item according to the conventional approach that it is desirable to have spherical aberration become zero. Namely, comparative example 1 correlates to a case when, for example, a contact lens for which the spherical aberration of the naked eye is offset to become zero was worn, so that the spherical aberration (spherical aberration volume of the $C_4^0$ term with a Zernike polynomial) of the eyeball model became zero. Meanwhile, with examples 1 through 5, all of these correlate to cases when a contact lens was worn with optical characteristics for which spherical aberration was adjusted and set actively according to the present invention. In particular, example 3 correlates to a case when the spherical aberration of the contact lens was set considering the coma aberration and the spherical aberration of the naked eye so that spherical aberration of the same RMS value as the coma aberration is set in the eyeball model.

From the results of the simulation optical image shown in FIG. 6, it is clear that compared to a case when the spherical aberration is offset and set to zero, the case of actively adjusting and setting spherical aberration suppresses changes in vision (image quality) that come with changes in the focal point position. Specifically, with comparative example 1, with the optimal focal point position (0.00 D), the image clarity is high, but as that is moved away from, there is a sudden drop in vision, and at a position changed by 1.00 D, it is almost impossible to see, and it is only possible to see items of a specified distance, so we can understand that ensuring quality of vision is difficult. Also, not only with example 3 for which the spherical aberration was set optimally, but particularly with the items of examples 2 and 4, even at a position changed by 1.00 D, it is clear that the quality of the image is ensured well compared to comparative example 1.

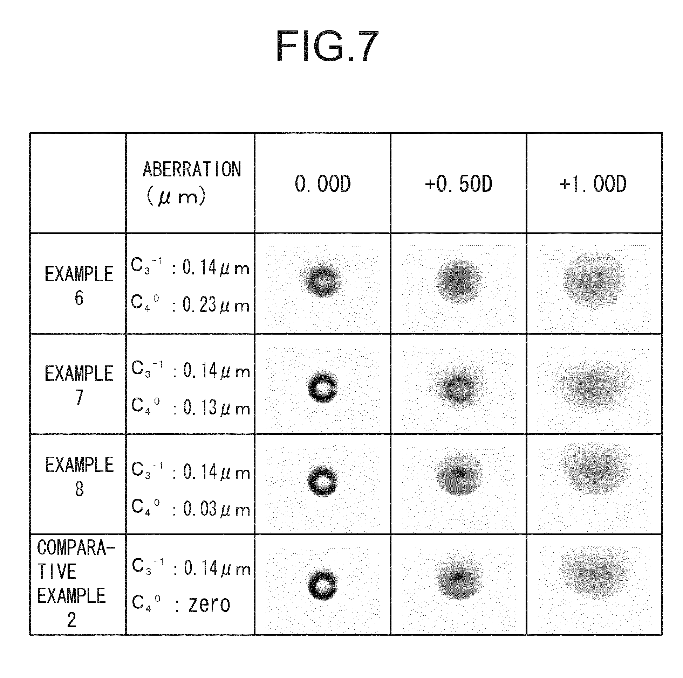

Also, FIG. 7 shows the simulation results when a contact lens manufactured according to the present invention was worn on an eyeball model of a 20 year old typical person. With this simulation, the same as with examples 1 through 5 noted above, using ZEMAX, as the eyeball model of a 20 year old typical person, an item of coma aberration (vertical coma aberration volume of the $C_3^{-1}$ term with the Zernike polynomial) of 0.14 $\mu$m was constructed. Then, with the contact lens according to the present invention worn on that eyeball model, for optical characteristics of the eye optical system correlating to the optical area corresponding to a pupil of 6 mm, a Landolt ring simulation optical image was obtained and vision was assessed.

Specifically, the same as with comparative example 1, comparative example 2 correlates to a case of having the spherical aberration of the eye optical system be zero, according to the conventional approach that it is desirable to have spherical aberration become zero. Meanwhile, with examples 6 through 8, all of these correlate to cases for which a contact lens was worn with optical characteristics for which spherical aberration of the eye optical system was adjusted and set actively according to the present invention. In particular, example 7 is an item for which spherical aberration of roughly the same RMS value as the coma aberration of the eye optical system was realized with the contact lens.

From the results of the simulation optical image shown in FIG. 7, as shown in examples 6 through 8, compared to a case when the spherical aberration is offset and set to zero, a case when spherical aberration corresponding to the coma aberration existing in the naked eye is actively adjusted and set can be understood to be advantageous in ensuring overall quality of vision by being able to suppress changes in vision (image quality) that come with changes in the focal point position.

KEY TO SYMBOLS

10: Contact lens, 12: Human eye, 16: Optical part

**Claims**

1.   A contact lens manufacturing method comprising:

   an optical characteristics setting step of setting in an optical part a spherical aberration of a size corresponding to a coma aberration of a naked eye of a user, and of a size for which a spherical aberration of the naked eye of the user will not be offset and will be made to remain;
   a lens shape setting step of determining a lens shape of the optical part wherein the spherical aberration set at the optical characteristics setting step is provided as a corrective optical characteristic for a residual irregular astigmatism caused by high-order aberration in the naked eye of the user; and
   a lens forming step of forming a contact lens having optical characteristics in which a high-order aberration of that optical part is rotationally symmetrical around an optical axis, by means of forming the optical part to have the lens shape determined by the lens shape setting step;
   wherein at the optical characteristics setting step, the spherical aberration of the optical part is set with an RMS value that satisfies both of the following formulas:

   contact lens spherical aberration $\geq$ coma aberration of the naked eye of the user - spherical aberration of the naked eye of the user -0.10$\mu$m; and
   contact lens spherical aberration $\leq$ coma aberration of the naked eye of the user - spherical aberration of the naked eye of the user +0.10$\mu$m.

2.   The contact lens manufacturing method according to claim 1, wherein at the optical characteristics setting step, at least one of a spherical lens power and a cylindrical lens power is set concomitantly with the spherical aberration so as to function as a low-order aberration that offsets a low-order aberration vision of the naked eye of the user.

3.   The contact lens manufacturing method according to claim 2, wherein at the optical characteristics setting step, the optical characteristics of the optical part are set as rotationally symmetrical optical characteristics around the optical axis entirely including the low-order aberration and the high-order aberration.

**Patentansprüche**

1.   Verfahren zum Herstellen einer Kontaktlinse, umfassend:

   einen Schritt, in dem optische Eigenschaften eingestellt werden, wobei in einem optischen Teil eine sphärische Aberration einer Größe, die einer Komaaberration eines bloßen Auges eines Nutzers entspricht, und einer Größe, für die eine sphärische Aberration des bloßen Auges des Nutzers nicht kompensiert wird und unverändert beibehalten wird, eingestellt wird;
   einen Schritt, in dem eine Linsenform eingestellt wird, wobei eine Linsenform des optischen Teils bestimmt wird, wobei die in dem Schritt, in dem optische Eigenschaften eingestellt werden, eingestellte sphärische Aberration als korrektive optische Eigenschaft für einen irregulären Residualastigmatismus, der durch eine Aberration hoher Ordnung in dem bloßen Auges des Nutzers verursacht wird, bereitgestellt wird;
   einen Schritt, in dem eine Linse ausgebildet wird, wobei eine Kontaktlinse mittels eines Ausbildens des optischen Teils so gebildet wird, dass sie die Linsenform aufweist, die in dem Schritt, in dem eine Linsenform eingestellt wird, bestimmt wurde, wobei die Kontaktlinse optische Eigenschaften aufweist, bei denen eine Aberration hoher Ordnung des optischen Teils rotationssymmetrisch um eine optische Achse ist;
   wobei in dem Schritt, in dem die optischen Eigenschaften eingestellt werden, die sphärische Aberration des optischen Teils bei einem RMS-Wert bzw. quadratischem Mittelwert eingestellt wird, der beide folgende Formeln erfüllt:

sphärische Aberration der Kontaktlinse $\geq$ Komaaberration des bloßen Auges des Nutzers - sphärische Aberration des Nutzers - 0,10 $\mu$m, und

sphärische Aberration der Kontaktlinse $\leq$ Komaaberration des bloßen Auges des Nutzers - sphärische Aberration des Nutzers + 0,10 $\mu$m.

**2.** Verfahren zum Herstellen einer Kontaktlinse gemäß Anspruch 1, wobei in dem Schritt, in dem optische Eigenschaften eingestellt werden, wenigstens eine von einer sphärischen Linsenstärke und einer zylindrischen Linsenstärke gleichzeitig zu der sphärischen Aberration eingestellt wird, um als eine Aberration von niedriger Ordnung zu wirken, die eine Aberrationssicht von niedriger Ordnung des bloßen Auges des Nutzers kompensiert.

**3.** Verfahren zum Herstellen einer Kontaktlinse gemäß Anspruch 2, wobei in dem Schritt, in dem die optischen Eigenschaften eingestellt werden, die optischen Eigenschaften des optischen Teils als rotationssymmetrische optische Eigenschaften um die optische Achse insgesamt einschließlich der Aberration niedriger Ordnung und der Aberration hoher Ordnung eingestellt werden.

**Revendications**

**1.** Procédé de fabrication d'une lentille de contact, comprenant :

une étape de réglage des caractéristiques optiques consistant à déterminer dans une partie optique une aberration sphérique d'une taille correspondant à une aberration de coma de l'oeil nu d'un utilisateur, et d'une taille pour laquelle une aberration sphérique de l'oeil nu de l'utilisateur ne sera pas compensée et sera amenée à rester ;
une étape de réglage de forme de lentille consistant à déterminer une forme de lentille de la partie optique dans laquelle l'aberration sphérique établie lors de l'étape de réglage des caractéristiques optiques est fournie en tant que caractéristique optique correctrice d'un astigmatisme irrégulier résiduel causé par une aberration d'ordre supérieur de l'oeil nu de l'utilisateur ; et
une étape de formation de lentille consistant à former une lentille de contact ayant des caractéristiques optiques dans lesquelles une aberration d'ordre supérieur de cette partie optique est à symétrie de révolution autour d'un axe optique, en formant la partie optique de manière à ce qu'elle ait la forme de lentille déterminée par l'étape de réglage de forme de lentille ;
dans lequel, lors de l'étape de réglage des caractéristiques optiques, l'aberration sphérique de la partie optique est établie par une valeur RMS (valeur quadratique moyenne) qui répond aux deux formules suivantes :

aberration sphérique de lentille de contact $\geq$ aberration de coma de l'oeil nu de l'utilisateur - aberration sphérique de l'oeil nu de l'utilisateur -0,10 $\mu$m ; et
aberration sphérique de lentille de contact $\leq$ aberration de coma de l'oeil nu de l'utilisateur - aberration sphérique de l'oeil nu de l'utilisateur +0,10 $\mu$m.

**2.** Procédé de fabrication d'une lentille de contact selon la revendication 1, dans lequel, lors de l'étape de réglage des caractéristiques optiques, au moins un élément parmi la puissance de lentille sphérique et la puissance de lentille cylindrique est fixé de façon concomitante avec l'aberration sphérique de manière à servir d'aberration d'ordre inférieur qui compense une vision d'aberration d'ordre inférieur de l'oeil nu de l'utilisateur.

**3.** Procédé de fabrication d'une lentille de contact selon la revendication 2, dans lequel, lors de l'étape de réglage des caractéristiques optiques, les caractéristiques optiques de la partie optique sont fixées comme des caractéristiques optiques à symétrie de révolution autour de l'axe optique incluant entièrement l'aberration d'ordre inférieur et l'aberration d'ordre supérieur.

# FIG.1

# FIG.2

# FIG.3

# FIG.4

# FIG.5

# FIG.6

| | ABERRATION $(\mu m)$ | 0.00D | +0.50D | +1.00D |
|---|---|---|---|---|
| EXAMPLE 1 | $C_3^{-1}$ : 0.24 $\mu m$<br>$C_4^{0}$ : 0.33 $\mu m$ | | | |
| EXAMPLE 2 | $C_3^{-1}$ : 0.24 $\mu m$<br>$C_4^{0}$ : 0.29 $\mu m$ | | | |
| EXAMPLE 3 | $C_3^{-1}$ : 0.24 $\mu m$<br>$C_4^{0}$ : 0.24 $\mu m$ | | | |
| EXAMPLE 4 | $C_3^{-1}$ : 0.24 $\mu m$<br>$C_4^{0}$ : 0.19 $\mu m$ | | | |
| EXAMPLE 5 | $C_3^{-1}$ : 0.24 $\mu m$<br>$C_4^{0}$ : 0.13 $\mu m$ | | | |
| COMPARA-TIVE EXAMPLE 1 | $C_3^{-1}$ : 0.24 $\mu m$<br>$C_4^{0}$ : zero | | | |

# FIG.7

| | ABERRATION ($\mu$m) | 0.00D | +0.50D | +1.00D |
|---|---|---|---|---|
| EXAMPLE 6 | $C_3^{-1}$ : 0.14$\mu$m<br>$C_4^0$ : 0.23$\mu$m | | | |
| EXAMPLE 7 | $C_3^{-1}$ : 0.14$\mu$m<br>$C_4^0$ : 0.13$\mu$m | | | |
| EXAMPLE 8 | $C_3^{-1}$ : 0.14$\mu$m<br>$C_4^0$ : 0.03$\mu$m | | | |
| COMPARA-TIVE EXAMPLE 2 | $C_3^{-1}$ : 0.14$\mu$m<br>$C_4^0$ : zero | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004526985 A
- JP 2006517676 A
- JP 2010093192 A
- WO 0075716 A
- JP 4652558 B
- US 7078665 B